# EUROPÄISCHE PATENTSCHRIFT

(11) **EP 2 946 991 B1**
(45) Veröffentlichungstag und Bekanntmachung des Hinweises auf die Patenterteilung: **23.11.2016**
(21) Anmeldenummer: 15164431.7
(22) Anmeldetag: 21.04.2015
(51) Int. Cl.: B62D 61/12, B60G 9/00, B60G 5/00, B60G 7/02

(54) **ANHEBEVORRICHTUNG FÜR EINE FAHRZEUGACHSE EINES FAHRZEUGS**
LIFTING SYSTEM FOR A VEHICLE AXLE OF A VEHICLE
DISPOSITIF DE LEVAGE POUR UN ESSIEU D'UN VÉHICULE

(30) Priorität: 21.05.2014 DE 102014209633
(43) Veröffentlichungstag der Anmeldung: 25.11.2015
(73) Patentinhaber: ZF Friedrichshafen AG, 88046 Friedrichshafen (DE)
(72) Erfinder: Helm, Eike, 49356 Diepholz (DE); Knopp, Sören, 32351 Stemwede (DE)

(56) Entgegenhaltungen:
- EP-A1- 2 308 701
- EP-A1- 2 502 809
- EP-B1- 1 902 933
- WO-A1-98/38074
- WO-A1-2014/066728
- DE-U1- 20 317 350
- FR-A1- 2 649 045
- US-A- 3 325 181
- US-A1- 2003 107 198
- US-A1- 2013 277 936

## Beschreibung

Die Erfindung betrifft eine Anhebevorrichtung für eine Fahrzeugachse eines Fahrzeugs, mit einer mit einem Fahrzeugrahmen des Fahrzeugs verbundenen und sich nach unten erstreckenden Lenkerstütze, einem um eine Schwenkachse schwenkbar an der Lenkerstütze gelagerten Lenker, der im Abstand zur Schwenkachse an einem Achskörper der Fahrzeugachse befestigt ist, einer unterhalb der Schwenkachse angeordneten und starr mit der Lenkerstütze verbundenen Konsole und einem eine Hubstange umfassenden Linearantrieb, durch dessen Betätigung die Hubstange translatorisch bewegbar ist.

Die EP 1 902 933 B1 offenbart einen Achslift für luftgefederte Fahrzeugachsen, deren Achskörper an einem Längslenker befestigt ist, der mit seinem vorderen Ende schwenkbar an einer fahrzeugfesten Lenkerstütze angelenkt ist, mit einer in verschiedenen Positionen unter der Lenkerstütze festlegbaren Konsole zur Aufnahme einer Hebevorrichtung, durch deren Betätigung die Fahrzeugachse anhebbar ist, wobei die Abstützung der Konsole an der Lenkerstütze an mindestens zwei in Fahrtrichtung zueinander beabstandeten Orten erfolgt, und mit einer in Fahrtrichtung vor dem Schwenkgelenk angeordneten Lochreihe zum wahlweisen Hindurchführen eines die Konsole in einer bestimmten Schwenklage verriegelnden Bolzens, wobei eine in Fahrtrichtung hinter dem Schwenkgelenk angeordnete, weitere Lochreihe zum wahlweisen Hindurchführen eines die Konsole in einer bestimmten Schwenklage an der Lenkerstütze verriegelnden Bolzens vorgesehen ist.

Bei diesem Achslift ist die Hebevorrichtung unter der Konsole angeordnet, wodurch die Bodenfreiheit des Fahrzeugs eingeschränkt ist. Diese Einschränkung der Bodenfreiheit wird noch verstärkt, wenn die Konsole zusammen mit der Hebevorrichtung nach unten geschwenkt wird.

Ausgehend hiervon liegt der Erfindung die Aufgabe zugrunde, bei einer Anhebevorrichtung der eingangs genannten Art eine möglichst große Bodenfreiheit erzielen zu können.

Diese Aufgabe wird durch eine Anhebevorrichtung nach Anspruch 1 gelöst. Bevorzugte Weiterbildungen der Anhebevorrichtung sind in den Unteransprüchen und in der nachfolgenden Beschreibung gegeben.

Die Anhebevorrichtung für eine Fahrzeugachse eines Fahrzeugs weist eine mit einem Fahrzeugrahmen des Fahrzeugs verbundene und sich nach unten erstreckende Lenkerstütze, einen um eine Schwenkachse schwenkbar an der Lenkerstütze gelagerten Lenker, der im Abstand zur Schwenkachse an einem Achskörper der Fahrzeugachse befestigt ist, eine unterhalb der Schwenkachse angeordnete und starr mit der Lenkerstütze verbundenen Konsole und einen eine Hubstange umfassenden Linearantrieb auf, durch dessen Betätigung die Hubstange translatorisch bewegbar ist, wobei der Linearantrieb an dem mit einem Durchgangsloch versehenen Lenker befestigt ist, durch welches sich die Hubstange in Richtung auf die Konsole hindurch erstreckt, gegen welche die Hubstange durch Betätigung des Linearantriebs drückbar und dadurch die Fahrzeugachse anhebbar ist.

Dadurch, dass der Linearantrieb an dem Lenker und nicht unterhalb der Konsole angeordnet ist, kann Bodenfreiheit für das Fahrzeug gewonnen werden. Ferner ergibt sich durch das Hindurchführen der Hubstange durch das Durchgangsloch des Lenkers ein sehr kompakter und somit raumsparender Aufbau der Anhebevorrichtung.

Das Durchgangsloch des Lenkers ist bevorzugt im Abstand zur Schwenkachse vorgesehen. Vorteilhaft ist das Durchgangsloch des Lenkers zwischen der Schwenkachse und dem Achskörper vorgesehen. Bevorzugt ist der Linearantrieb im Abstand zur Schwenkachse an dem Lenker befestigt. Vorteilhaft ist der Linearantrieb zwischen der Schwenkachse und dem Achskörper an dem Lenker befestigt. Die Hubstange ist bevorzugt im Abstand zur Schwenkachse angeordnet und/oder erstreckt sich im Abstand zur Schwenkachse durch das Durchgangsloch des Lenkers hindurch. Vorteilhaft ist die Hubstange zwischen der Schwenkachse und dem Achskörper angeordnet und/oder die Hubstange erstreckt sich bevorzugt zwischen der Schwenkachse und dem Achskörper durch das Durchgangsloch des Lenkers hindurch.

Die Hubstange ist durch Betätigung des Linearantriebs vorzugsweise translatorisch nach unten bewegbar. Insbesondere erstreckt sich die Lenkerstütze von dem Fahrzeugrahmen aus nach unten.

Dem Fahrzeug ist bevorzugt eine Fahrzeuglängsrichtung, eine Fahrzeugquerrichtung und eine Fahrzeughochrichtung zugeordnet. Die Fahrzeuglängsrichtung, die Fahrzeugquerrichtung und die Fahrzeughochrichtung verlaufen insbesondere senkrecht zueinander und bilden vorzugsweise in dieser Reihenfolge ein Rechtssystem. Ferner ist dem Fahrzeug bevorzugt eine Fahrtrichtung zugeordnet, die vorzugsweise in Fahrzeuglängsrichtung verläuft. Insbesondere handelt es sich bei der Fahrtrichtung um die gewöhnliche Vorwärtsfahrtrichtung des Fahrzeugs. Die Fahrzeuglängsrichtung verläuft vorzugsweise horizontal. Ferner verläuft die Fahrzeugquerrichtung bevorzugt horizontal. Die Fahrzeughochrichtung verläuft insbesondere vertikal.

Bevorzugt umfasst die Fahrzeugachse mehrere Fahrzeugräder. Vorteilhaft steht die Fahrzeugachse mit ihren Fahrzeugrädern auf einem Untergrund auf. Dies entspricht insbesondere einem normalen und/oder abgesenkten Zustand der Fahrzeugachse. In einem angehobenen Zustand der Fahrzeugachse weisen die Fahrzeugräder insbesondere einen Abstand zum Untergrund auf, bevorzugt in Fahrzeughochrichtung und/oder in vertikaler Richtung.

Unter einem Anheben der Fahrzeugachse ist insbesondere eine Bewegung der Fahrzeugachse relativ zum Fahrzeugrahmen in Fahrzeughochrichtung zu verstehen. Unter einem Absenken der Fahrzeugachse ist insbesondere eine Bewegung der Fahrzeugachse relativ zum Fahrzeugrahmen entgegen der Fahrzeughochrichtung zu verstehen. Begriffe wie oben, oberhalb, über, auf, hoch, unten, unter, unterhalb, runter etc. beziehen sich insbesondere auf die Fahrzeughochrichtung. Begriffe wie vorne, vor, hinten, hinter etc. beziehen sich insbesondere auf die Fahrzeuglängsrichtung.

Eine bevorzugte Funktionsweise der Anhebevorrichtung zum Anheben und Absenken der Fahrzeugachse wird nachfolgend beschrieben. Zum Anheben der Fahrzeugachse wird der Linearantrieb betätigt, der daraufhin die Hubstange translatorisch in Richtung Konsole insbesondere nach unten bewegt. Stößt die Hubstange an der Konsole an, führt eine weitere Bewegung der Hubstange zu einem Hochschwenken des Lenkers, an dem der Linearantrieb befestigt ist. Da der Lenker am Achskörper befestigt ist, nimmt der Lenker den Achskörper bei seiner Schwenkbewegung mit und hebt diesen an. Somit wird die Fahrzeugachse insgesamt angehoben.

Zum Absenken der angehobenen Fahrzeugachse wird die Hubstange insbesondere translatorisch nach oben bewegt. Aufgrund der auf die Fahrzeugachse wirkenden Gewichtskraft schwenkt der Lenker zusammen mit dem Achskörper nach unten. Dies kann je nach Ausgestaltung des Linearantriebs auf unterschiedliche Weisen erfolgen. Gemäß einer ersten Möglichkeit wird die Hubstange mittels des Linearantriebs aktiv nach oben bewegt. Der Linearantrieb ist somit in zwei unterschiedlichen Betriebsarten betätigbar, wobei in einer ersten Betriebsart die Hubstange mittels des Linearantriebs translatorisch nach unten bewegbar ist und in einer zweiten Betriebsart die Hubstange mittels des Linearantriebs translatorisch nach oben bewegbar ist. Bei der zweiten Betriebsart kann die Bewegung der Hubstange nach oben durch die auf die Fahrzeugachse wirkende Gewichtskraft unterstützt werden. Gemäß einer zweiten Möglichkeit wird die Hubstange allein durch die auf die Fahrzeugachse wirkende Gewichtskraft nach oben bewegt, sobald der Linearantrieb nicht mehr betätigt wird.

Der Linearantrieb ist z.B. ein elektrischer Linearantrieb. In diesem Fall ist der Linearantrieb insbesondere durch eine Stromversorgung des Fahrzeugs mit elektrischem Strom versorgbar. Bevorzugt ist der Linearantrieb aber durch einen Hydraulik- oder Pneumatikzylinder gebildet, dessen Kolbenstange insbesondere die Hubstange oder zumindest einen Teil derselben bildet. In diesem Fall ist der Linearantrieb vorzugsweise durch eine Druckluftversorgung und/oder durch einen Hydraulikkreislauf des Fahrzeugs mit Druckluft und/oder Hydraulikflüssigkeit versorgbar.

Der Lenker weist bevorzugt eine Aufnahme für den Linearantrieb auf, die insbesondere in den Lenker integriert ist. Vorzugsweise sitzt der Linearantrieb in, an oder auf der Aufnahme. Vorteilhaft bildet die Aufnahme einen Flansch oder Aufnahmeflansch. Insbesondere ist der Linearantrieb an der Aufnahme befestigt. Vorzugsweise durchsetzt das Durchgangsloch die Aufnahme. Bevorzugt sitzt der Linearantrieb oben auf dem Lenker und/oder der Aufnahme, wobei die Hubstange sich insbesondere nach unten durch das Durchgangsloch des Lenkers hindurch erstreckt.

Die Hubstange ist vorzugsweise gerade ausgebildet. Insbesondere bildet die Hubstange einen starren Körper. Vorteilhaft ist die Hubstange einstückig ausgebildet. Im angehobenen Zustand der Fahrzeugachse ist die Hubstange bevorzugt an der Konsole abgestützt. Insbesondere ist die Hubstange im angehobenen Zustand der Fahrzeugachse direkt an der Konsole abgestützt. Bevorzugt umfasst die Anhebevorrichtung somit nur wenige Bauteile und ist relativ einfach aufgebaut, sodass sich in Bezug auf die Anhebevorrichtung geringe Herstellungskosten und eine geringe Fehrleranfälligkeit ergeben.

Im nicht angehobenen Zustand der Fahrzeugachse weist die Hubstange bevorzugt einen Abstand zu der Konsole auf. Hierdurch kann ein Einfedern der Fahrzeugachse gegenüber dem Fahrzeugrahmen ermöglicht werden, ohne dass die Hubstange an der Konsole anstößt. Insbesondere ist die Fahrzeugachse und/oder der Achskörper und/oder der Lenker mittels einer Fahrzeugfeder federnd am Fahrzeugrahmen abgestützt. Ferner ist die Fahrzeugachse und/oder der Achskörper und/oder der Lenker bevorzugt mittels eines Dämpfers mit dem Fahrzeugrahmen verbunden.

Die Konsole ist bevorzugt am unteren Ende der Lenkerstütze angeordnet. Insbesondere erstreckt sich die Konsole von der Lenkerstütze weg, vorzugsweise in Richtung auf den Achskörper. Vorteilhaft erstreckt sich die Konsole von der Lenkerstütze in Fahrzeuglängsrichtung weg, beispielsweise in Fahrtrichtung des Fahrzeugs oder entgegengesetzt. Die Konsole weist bevorzugt eine obere Auflagefläche auf, gegen welche die Hubstange drückbar ist. Vorteilhaft bildet die Konsole einen starren Körper.

Der Lenker erstreckt sich bevorzugt in oder im Wesentlichen in Fahrzeuglängsrichtung. Insbesondere ist der Lenker ein Längslenker. Vorteilhaft ist der Lenker mit seinem vorderen oder mit seinem hinteren Ende schwenkbar an der Lenkerstütze angelenkt.

Der Lenker ist insbesondere mittels eines Gelenks oder Gummilagers um die Schwenkachse schwenkbar an der Lenkerstütze gelagert. Ferner ist der Lenker bevorzugt mit seinem der Schwenkachse abgewandten Ende oder Endbereich an dem Achskörper befestigt. Vorzugsweise ist der Lenker an den Achskörper angelenkt, beispielsweise mittels eines Gelenks oder Gummilagers. Insbesondere erstreckt sich der Lenker durch ein in dem Achskörper vorgesehenes Durchgangsloch hindurch und ist auf einer der Lenkerstütze abgewandten Seite der Fahrzeugachse an dem Achskörper befestigt. Dies führt zu einem sehr kompakten Aufbau der Fahrzeugachse.

Bei dem Fahrzeug handelt es sich insbesondere um ein Landfahrzeug. Bevorzugt ist das Fahrzeug ein Nutzfahrzeug. Vorteilhaft ist das Fahrzeug ein Kraftfahrzeug, ein Anhänger oder ein Sattelauflieger.

Die Erfindung betrifft ferner ein Fahrzeug mit wenigstens einer angetriebenen Achse und wenigstens einer anhebbaren Achse, der zumindest eine Anhebevorrichtung zugeordnet ist, bei der es sich insbesondere um die zuvor beschriebene Anhebevorrichtung handelt. Die anhebbare Achse ist in Fahrtrichtung vorzugsweise vor der angetriebenen Achse angeordnet. Bei der anhebbaren Achse handelt es sich somit bevorzugt um eine sogenannte Vorlaufachse, an welcher der Antriebsstrang des Fahrzeugs vorbeigeführt ist. Insbesondere steht bei einer Vorlaufachse wegen des vorbeigeführten Antriebsstrangs nur wenig freier Bauraum zum Vorsehen der Anhebevorrichtung zur Verfügung, sodass die zuvor beschriebene Anhebevorrichtung aufgrund ihres kompakten und raumsparenden Aufbaus besonders geeignet für eine Vorlaufachse ist.

Die Erfindung wird nachfolgend anhand einer bevorzugten Ausführungsform unter Bezugnahme auf die Zeichnung beschrieben. In der Zeichnung zeigen:
- Fig. 1: eine Seitenansicht eines Kraftfahrzeugs mit einer anhebbaren Vorlaufachse,
- Fig. 2: eine perspektivische Darstellung einer Achsaufhängung der Vorlaufachse, wobei die Fahrzeugräder der Vorlaufachse und Teile des Fahrzeugaufbaus weggelassen wurden,
- Fig. 3: eine andere perspektivische Ansicht der Achsaufhängung der Vorlaufachse,
- Fig. 4: eine Seitenansicht der Achsaufhängung der Vorlaufachse, wobei Teile der Achsaufhängung und der Vorlaufachse weggelassen wurden,
- Fig. 5: eine perspektivische Ansicht eines aus Fig. 4 ersichtlichen Längslenkers mit Linearantrieb und einer Konsole,
- Fig. 6: eine perspektivische Ansicht des Linearantriebs in Einzeldarstellung und
- Fig. 7: eine perspektivische Ansicht des Längslenkers in Einzeldarstellung.

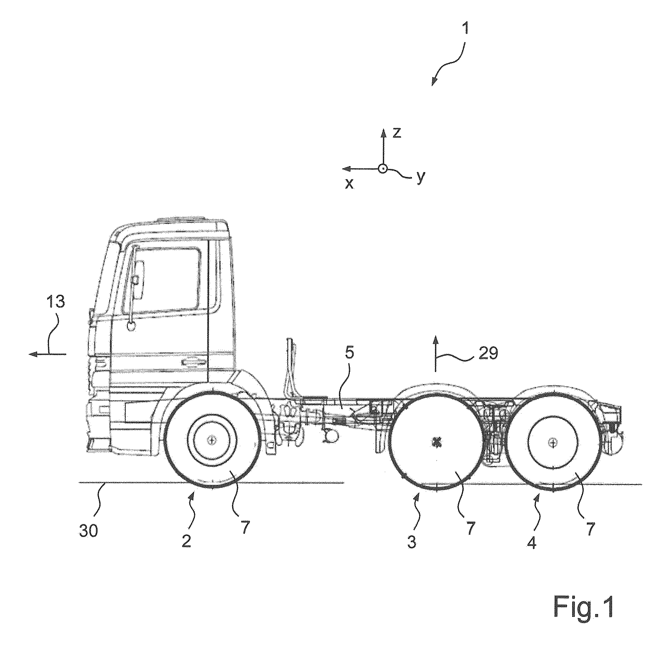

Aus Fig. 1 ist eine Seitenansicht eines als Kraftfahrzeug ausgebildeten Fahrzeugs 1 mit drei Fahrzeugachsen 2, 3 und 4 ersichtlich, wobei es sich bei der Achse 2 um eine lenkbare Vorderachse, bei der Achse 4 um eine angetriebene Hinterachse und bei der Achse 3 um eine anhebbare Vorlaufachse handelt. Das Fahrzeug 1 umfasst einen Fahrzeugrahmen 5, an dem die Achsen 2, 3 und 4 aufgehängt sind, deren Fahrzeugräder mit dem Bezugszeichen 7 gekennzeichnet sind, mittels welchen das Fahrzeug 1 auf einem Untergrund 30 aufsteht. Ferner sind dem Fahrzeug 1 eine Fahrzeuglängsrichtung x, eine Fahrzeugquerrichtung y und eine Fahrzeughochrichtung z zugeordnet. Die Fahrzeugquerrichtung y erstreckt sich dabei aus der Zeichenebene heraus. Auch ist die in Fahrzeuglängsrichtung x verlaufende Vorwärtsfahrtrichtung 13 des Fahrzeugs 1 dargestellt.

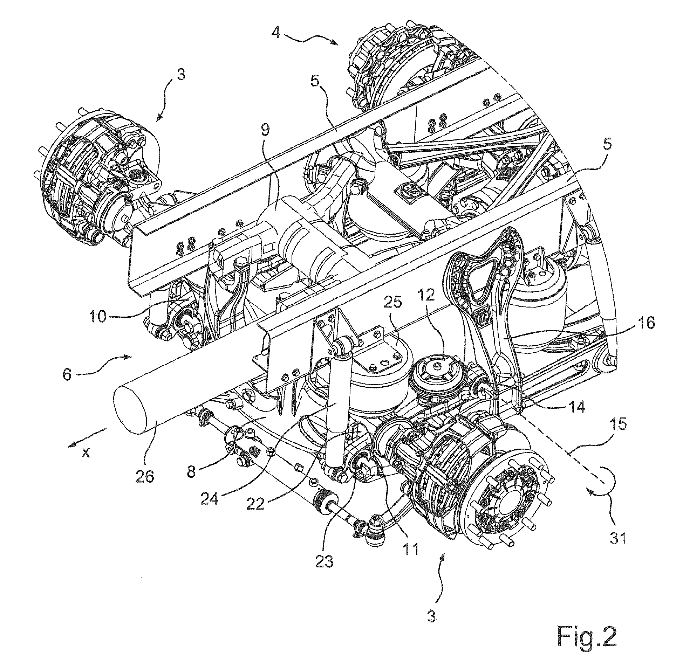

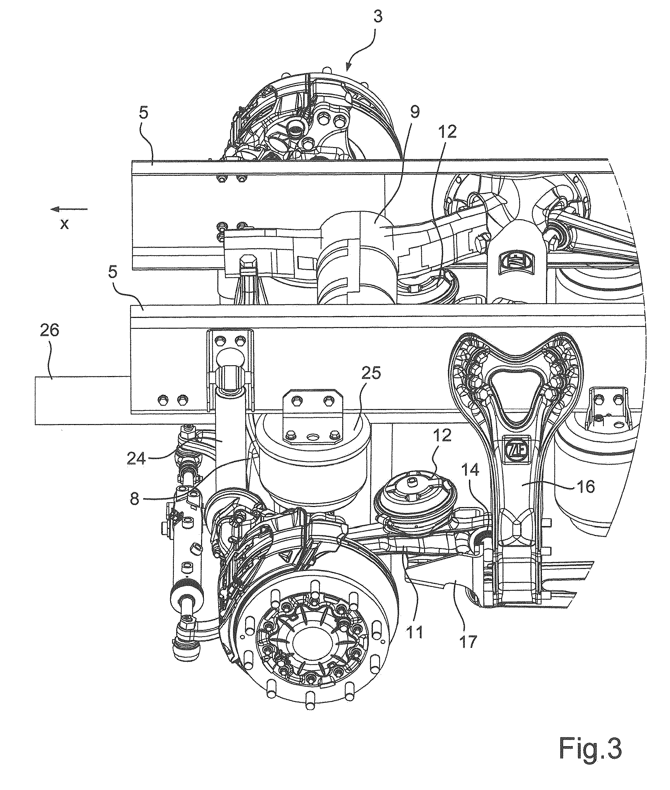

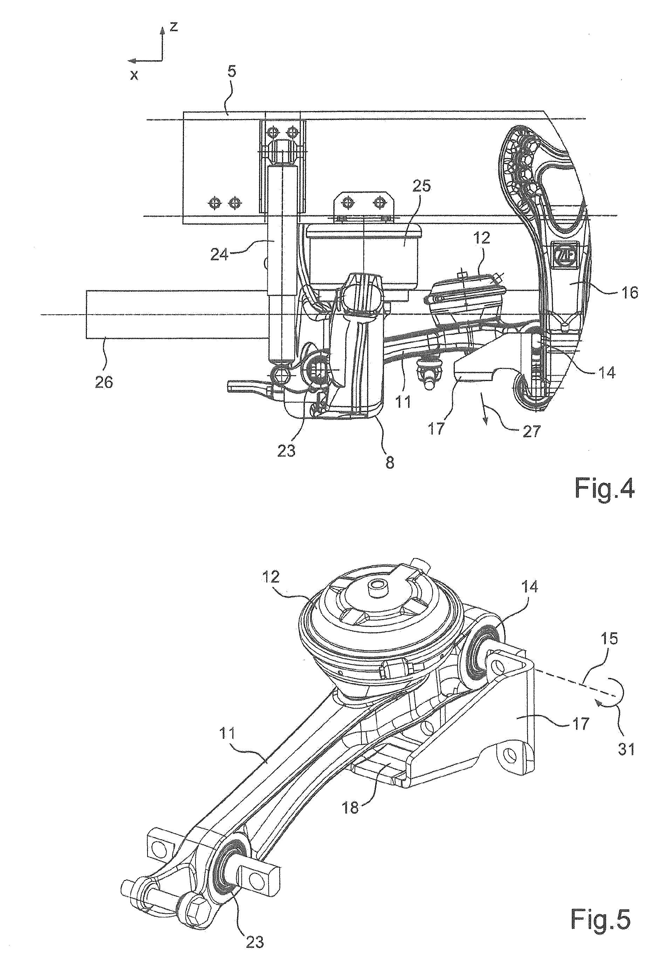

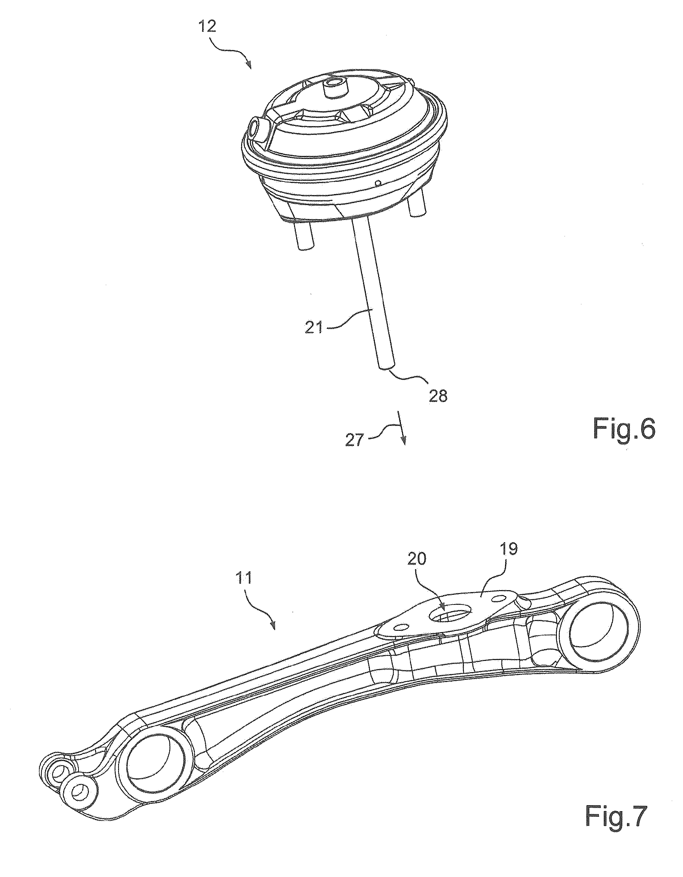

Aus den Fig. 2 bis 4 sind unterschiedliche Ansichten und Teilansichten der Achsaufhängung 6 der Fahrzeugachse 3 ersichtlich, deren Fahrzeugräder 7 der Übersichtlichkeit halber weggelassen wurden. Die Fahrzeugachse 3 umfasst einen Achskörper 8, der über einen oberen Vierpunktlenker 9 und zwei untere Längslenker 10 und 11 schwenkbar am Fahrzeugrahmen 5 angelenkt ist. Ferner ist eine Welle 26 des Antriebsstrangs des Fahrzeugs 1 ersichtlich, die sich an der Fahrzeugachse 3 vorbei bis zur angetriebenen Fahrzeugachse 4 erstreckt und im Bereich der Fahrzeugachse 3 zwischen Vierpunktlenker 9 und Achskörper 8 verläuft. Jeder der Längslenker 10 und 11 trägt einen Linearantrieb 12, der zum Anheben der Fahrzeugachse 3 dient. Da der Längslenker 10 analog zum Längslenker 11 mit dem Fahrzeugrahmen 5 und mit dem Achskörper 8 verbunden ist und mittels seines Linearantriebs 12 auf die gleiche Weise wie der Längslenker 11 bewegbar ist, wird in der nachfolgenden Beschreibung lediglich auf den Längslenker 11 eingegangen, der auch in Fig. 5 zusammen mit seinem Linearantrieb 12 und in Fig. 7 in Einzeldarstellung gezeigt ist. Aus Fig. 6 ist ferner der Linearantrieb 12 des Längslenkers 11 in Einzeldarstellung ersichtlich.

Der Längslenker 11 ist mittels eines Gelenks 14 um eine Schwenkachse 15 schwenkbar an einer Lenkerstütze 16 gelagert, die starr an dem Fahrzeugrahmen 5 befestigt ist und sich von diesem aus nach unten erstreckt. Unterhalb der Schwenkachse 15 ist an der Lenkerstütze 16 eine Konsole 17 starr befestigt, die von der Lenkerstütze 16 in Fahrzeuglängsrichtung x vorsteht und eine obere Auflagefläche 18 aufweist. Auf der Oberseite des Längslenkers 11 ist eine Aufnahme 19 vorgesehen, die von einem Durchgangsloch 20 durchsetzt ist, welches sich durch den Längslenker 11 hindurch erstreckt. Der Linearantrieb 12 ist an der Aufnahme 19 befestigt und weist eine Hubstange 21 auf, die sich durch das Durchgangsloch 20 hindurch in Richtung auf die Konsole 17 erstreckt und zu dieser im aus Fig. 1 dargestellten abgesenkten Zustand der Fahrzeugachse 3 einen Abstand aufweist. Der Linearantrieb ist hier als Pneumatikzylinder ausgebildet, dessen Kolbenstange die Hubstange 21 bildet.

Der Längslenker 11 erstreckt sich von der Lenkerstütze 16 aus im Wesentlichen in Fahrzeuglängsrichtung x durch ein in dem Achskörper 8 vorgesehenes Durchgangsloch 22 hindurch und ist auf der der Lenkerstütze 16 abgewandten Seite der Fahrzeugachse 3 an dem Achskörper 8 mittels eines Gelenks 23 angelenkt. Ferner ist der Längslenker 11 an seinem der Lenkerstütze 16 abgewandten Ende über einen Dämpfer 24 mit dem Fahrzeugrahmen 5 verbunden. Zusätzlich ist der Achskörper 8 mittels einer Fahrzeugfeder 25 federnd am Fahrzeugrahmen 5 abgestützt, die hier als Luftfeder ausgebildet ist.

Zum Anheben der Fahrzeugachse 3 wird der Linearantrieb 12 betätigt, sodass die Hubstange 21 in Richtung des Pfeils 27 translatorisch auf die Konsole 17 zu bewegt wird, bis das untere Ende 28 der Hubstange 21 an die Auflagefläche 18 der Konsole 17 anstößt. Eine weitere Bewegung der Hubstange 21 führt dann zu einem Hochschwenken des Längslenkers 11 relativ zu dem Fahrzeugrahmen 5 um die Schwenkachse 15 in Richtung des Pfeils 31. Da der Längslenker 11 über das Gelenk 23 mit dem Achskörper 8 verbunden ist, schwenkt auch dieser zusammen mit dem Längslenker 11 nach oben. Die Fahrzeugachse 3 wird somit in Richtung des Pfeils 29 in Fahrzeughochrichtung z angehoben. Das Betätigen des Linearantriebs 12 erfolgt hier durch Beaufschlagung mit Druckluft, da der Linearantrieb 12 in der gezeigten Ausführungsform als Pneumatikzylinder ausgebildet ist.

Zum Absenken der angehobenen Fahrzeugachse 3 wird lediglich die Druckluft aus dem Pneumatikzylinder abgelassen. Die Fahrzeugachse 3 senkt sich dann aufgrund ihrer Schwerkraft wieder in ihre aus Fig. 1 bis 4 ersichtliche Betriebsposition ab.

### Bezugszeichen

- 1: Fahrzeug
- 2: lenkbare Vorderachse
- 3: anhebbare Vorlaufachse
- 4: angetriebene Hinterachse
- 5: Fahrzeugrahmen
- 6: Achsaufhängung der Vorlaufachse
- 7: Fahrzeugrad
- 8: Achskörper
- 9: Vierpunktlenker
- 10: Längslenker
- 11: Längslenker
- 12: Linearantrieb
- 13: Fahrtrichtung
- 14: Gelenk
- 15: Schwenkachse
- 16: Lenkerstütze
- 17: Konsole
- 18: Auflagefläche der Konsole
- 19: Aufnahme
- 20: Durchgangsloch im Längslenker
- 21: Hubstange des Linearantriebs
- 22: Durchgangsloch im Achskörper
- 23: Gelenk
- 24: Dämpfer
- 25: Fahrzeugfeder
- 26: Antriebswelle
- 27: Bewegungsrichtung der Hubstange
- 28: Ende der Hubstange
- 29: Anheberichtung
- 30: Untergrund
- 31: Schwenkrichtung
- x: Fahrzeuglängsrichtung
- y: Fahrzeugquerrichtung
- z: Fahrzeughochrichtung

## Patentansprüche

1. Anhebevorrichtung für eine Fahrzeugachse (3) eines Fahrzeugs (1), mit einer mit einem Fahrzeugrahmen (5) des Fahrzeugs (1) verbundenen und sich nach unten erstreckenden Lenkerstütze (16), einem um eine Schwenkachse (15) schwenkbar an der Lenkerstütze (16) gelagerten Lenker (11), der im Abstand zur Schwenkachse (15) an einem Achskörper (8) der Fahrzeugachse (3) befestigt ist, einer unterhalb der Schwenkachse (15) angeordneten und starr mit der Lenkerstütze (16) verbundenen Konsole (17), einem eine Hubstange (21) umfassenden Linearantrieb (12), durch dessen Betätigung die Hubstange (21) translatorisch bewegbar ist, **dadurch gekennzeichnet, dass** der Linearantrieb (12) an dem mit einem Durchgangsloch (20) versehenen Lenker (11) befestigt ist, durch welches sich die Hubstange (21) in Richtung auf die Konsole (17) hindurch erstreckt, gegen welche die Hubstange (21) durch Betätigung des Linearantriebs (12) drückbar und dadurch die Fahrzeugachse (3) anhebbar ist.

2. Anhebevorrichtung nach Anspruch 1, **dadurch gekennzeichnet, dass** der Linearantrieb (12) oben auf dem Lenker (11) sitzt und die Hubstange (21) sich nach unten durch das Durchgangsloch (20) des Lenkers (11) hindurch erstreckt.

3. Anhebevorrichtung nach Anspruch 1 oder 2, **dadurch gekennzeichnet, dass** die Hubstange (21) im angehobenen Zustand der Fahrzeugachse (3) direkt an der Konsole (17) abgestützt ist.

4. Anhebevorrichtung nach einem der vorangehenden Ansprüche, **dadurch gekennzeichnet, dass** die Hubstange (21) im nicht angehobenen Zustand der Fahrzeugachse (3) einen Abstand zu der Konsole (17) aufweist.

5. Anhebevorrichtung nach einem der vorangehenden Ansprüche, **dadurch gekennzeichnet, dass** die Konsole (17) am unteren Ende der Lenkerstütze (16) angeordnet ist.

6. Anhebevorrichtung nach einem der vorangehenden Ansprüche, **dadurch gekennzeichnet, dass** die Konsole (17) sich von der Lenkerstütze (16) in Richtung auf den Achskörper (8) wegerstreckt.

7. Anhebevorrichtung nach einem der vorangehenden Ansprüche, **dadurch gekennzeichnet, dass** die Konsole (17) einen starren Körper bildet.

8. Anhebevorrichtung nach einem der vorangehenden Ansprüche, **dadurch gekennzeichnet, dass** der Lenker (11) mit seinem hinteren Ende schwenkbar an der Lenkerstütze (16) angelenkt ist.

9. Anhebevorrichtung nach einem der vorangehenden Ansprüche, **dadurch gekennzeichnet, dass** der Lenker (11) ein unterer Längslenker ist, sich durch ein in dem Achskörper (8) vorgesehenes Durchgangsloch (22) hindurch erstreckt und auf einer der Lenkerstütze (16) abgewandten Seite der Fahrzeugachse (3) an dem Achskörper (8) befestigt ist.

10. Anhebevorrichtung nach einem der vorangehenden Ansprüche, **dadurch gekennzeichnet, dass** der Linearantrieb (12) durch einen Hydraulik- oder Pneumatikzylinder gebildet ist, dessen Kolbenstange die Hubstange (21) oder zumindest einen Teil derselben bildet.

11. Fahrzeug mit wenigstens einer angetriebenen Achse (4) und wenigstens einer anhebbaren Achse (3), der zumindest eine Anhebevorrichtung nach einem der vorangehenden Ansprüche zugeordnet ist, wobei die anhebbare Achse (3) in Fahrtrichtung (13) vor der angetriebenen Achse (4) angeordnet ist.

## Claims

1. Lifting apparatus for a vehicle axle (3) of a vehicle (1), having a strut support (16) which is connected to a vehicle frame (5) of the vehicle (1) and extends downwards, a strut (11) which is mounted on the strut support (16) such that it can be pivoted about a pivot axis (15) and is fastened to an axle beam (8) of the vehicle axle (3) at a spacing from the pivot axis (15), a bracket (17) which is arranged below the pivot axis (15) and is connected rigidly to the strut support (16), a linear drive (12) which comprises a lifting rod (21) and by way of the actuation of which the lifting rod (21) can be moved translationally, **characterized in that** the linear drive (12) is fastened to the strut (11) which is provided with a through hole (20), through which the lifting rod (21) extends in the direction of the bracket (17), against which the lifting rod (21) can be pressed by way of actuation of the linear drive (12), and the vehicle axle (3) can be lifted as a result.

2. Lifting apparatus according to Claim 1, **characterized in that** the linear drive (12) is seated on the top of the strut (11), and the lifting rod (21) extends downwards through the through hole (20) of the strut (11).

3. Lifting apparatus according to Claim 1 or 2, **characterized in that** the lifting rod (21) is supported directly on the bracket (17) in the lifted state of the vehicle axle (3).

4. Lifting apparatus according to one of the preceding claims, **characterized in that** the lifting rod (21) is at a spacing from the bracket (17) in the non-lifted state of the vehicle axle (3).

5. Lifting apparatus according to one of the preceding claims, **characterized in that** the bracket (17) is arranged at the lower end of the strut support (16).

6. Lifting apparatus according to one of the preceding claims, **characterized in that** the bracket (17) extends away from the strut support (16) in the direction of the axle beam (8).

7. Lifting apparatus according to one of the preceding claims, **characterized in that** the bracket (17) forms a rigid body.

8. Lifting apparatus according to one of the preceding claims, **characterized in that** the strut (11) is articulated pivotably with its rear end on the strut support (16).

9. Lifting apparatus according to one of the preceding claims, **characterized in that** the strut (11) is a lower trailing arm, extends through a through hole (22) which is provided in the axle beam (8), and is fastened to the axle beam (8) on a side of the vehicle axle (3) which faces away from the strut support (16).

10. Lifting apparatus according to one of the preceding claims, **characterized in that** the linear drive (12) is formed by a hydraulic or pneumatic cylinder, the piston rod of which forms the lifting rod (21) or at least a part thereof.

11. Vehicle having at least one driven axle (4) and at least one axle (3) which can be lifted and is assigned at least one lifting apparatus according to one of the preceding claims, the axle (3) which can be lifted being arranged in front of the driven axle (4) in the driving direction (13).

## Revendications

1. Dispositif de levage pour un essieu de véhicule (3) d'un véhicule (1), comprenant un support de bras oscillant (16) connecté à un châssis de véhicule (5) du véhicule (1) et s'étendant vers le bas, un bras oscillant (11) supporté sur le support de bras oscillant (16) de manière à pouvoir pivoter autour d'un axe de pivotement (15), qui est fixé à distance de l'axe de pivotement (15) sur un corps d'essieu (8) de l'essieu de véhicule (3), une console (17) disposée en dessous de l'axe de pivotement (15) et connectée rigidement au support de bras oscillant (16), un entraînement linéaire (12) comprenant une barre de levage (21), dont l'actionnement permet de déplacer en translation la barre de levage (21), **caractérisé en ce que** l'entraînement linéaire (12) est fixé au bras oscillant (11) pourvu d'un trou traversant (20), à travers lequel la barre de levage (21) s'étend dans la direction de la console (17), contre laquelle la barre de levage (21) peut être pressée par actionnement de l'entraînement linéaire (12) et permet ainsi de lever l'essieu de véhicule (3).

2. Dispositif de levage selon la revendication 1, **caractérisé en ce que** l'entraînement linéaire (12) repose en haut sur le bras oscillant (11) et la barre de levage (21) s'étend vers le bas à travers le trou traversant (20) du bras oscillant (11).

3. Dispositif de levage selon la revendication 1 ou 2, **caractérisé en ce que** la barre de levage (21), dans l'état levé de l'essieu de véhicule (3), est supportée directement sur la console (17).

4. Dispositif de levage selon l'une quelconque des revendications précédentes, **caractérisé en ce que** la barre de levage (21), dans l'état non levé de l'essieu de véhicule (3), présente une distance à la console (17).

5. Dispositif de levage selon l'une quelconque des revendications précédentes, **caractérisé en ce que** la console (17) est disposée à l'extrémité inférieure du support de bras oscillant (16).

6. Dispositif de levage selon l'une quelconque des revendications précédentes, **caractérisé en ce que** la console (17) s'étend depuis le support de bras oscillant (16) dans la direction du corps d'essieu (8).

7. Dispositif de levage selon l'une quelconque des revendications précédentes, **caractérisé en ce que** la console (17) forme un corps rigide.

8. Dispositif de levage selon l'une quelconque des revendications précédentes, **caractérisé en ce que** le bras oscillant (11) est articulé avec son extrémité arrière de manière à pouvoir pivoter au niveau du support de bras oscillant (16).

9. Dispositif de levage selon l'une quelconque des revendications précédentes, **caractérisé en ce que** le bras oscillant (11) est un bras longitudinal inférieur qui s'étend à travers un trou traversant (22) prévu dans le corps d'essieu (8) et est fixé au corps d'essieu (8) sur un côté de l'essieu de véhicule (3) opposé au support de bras oscillant (16).

10. Dispositif de levage selon l'une quelconque des revendications précédentes, **caractérisé en ce que** l'entraînement linéaire (12) est formé par un cylindre hydraulique ou pneumatique dont la tige de piston forme la barre de levage (21) ou au moins une partie de celle-ci.

11. Véhicule comprenant au moins un essieu entraîné (4) et au moins un essieu pouvant être levé (3), auquel est associé au moins un dispositif de levage selon l'une quelconque des revendications précédentes, l'essieu pouvant être levé (3) étant disposé dans la direction de conduite (13) avant l'essieu entraîné (4).
